# EUROPÄISCHE PATENTANMELDUNG

(11) **EP 4 044 051 A1**
(43) Veröffentlichungstag der Anmeldung: **17.08.2022**
(21) Anmeldenummer: 21156591.6
(22) Anmeldetag: 11.02.2021
(51) Int. Cl.: G06F 21/14, G06F 21/12

(54) **RANDOMISIERUNG EINES BINÄRPROGRAMMCODES**

(71) Anmelder: Siemens Aktiengesellschaft, 80333 München (DE)
(72) Erfinder: Falk, Rainer, 85586 Poing (DE)

(57) **Zusammenfassung**

Die Erfindung gibt ein Verfahren zur Erstellung eines zweiten Binärprogrammcodes mit den folgenden Schritten an:
- Laden (S1) eines ersten Binärprogrammcodes in eine Binärcode-Randomisierungseinheit (3),
- Erstellen (S2) des zweiten Binärprogrammcodes durch die Binärcode-Randomisierungseinheit (3),
wobei der zweite Binärprogrammcode Ergebnis einer Diversifikation des ersten Binärprogrammcodes ist,
- Laden (S3) des zweiten Binärprogrammcodes in eine erste Einheit, wobei die erste Einheit von einer Computerprozessoreinheit (2) aufgewiesen wird.

Außerdem gibt die Erfindung ein Computerprogrammprodukt und ein computerlesbares Medium an.

## Beschreibung

### HINTERGRUND DER ERFINDUNG

### Gebiet der Erfindung

Die vorliegende Erfindung betrifft ein Verfahren zur Erstellung eines randomisierten Binärprogrammcodes. Außerdem gibt die Erfindung ein zugehöriges Computerprogrammprodukt und ein zugehöriges computerlesbares Medium an.

### Beschreibung des Stands der Technik

In der Praxis weist jede Software/Firmware Schwachstellen auf, die von einem Angreifer ausgenutzt werden können. Dies ist zumindest solange möglich, bis ein Patch verfügbar und eingespielt ist. In industriellen Systemen vergehen üblicherweise mehrere Monate, bis eine Schwachstelle tatsächlich geschlossen ist.

Es werden daher bereits unterschiedliche Technologien eingesetzt, um das Ausnutzen von vorhandenen Schwachstellen zu erschweren (Randomisierung des Speicher-Layouts, Address Space Layout Randomization ASLR, Stack-Schutz durch Hinzufügen von Prüfwerten (Stack Canaries) oder Verwenden von doppelten Stacks (shadow Stack), das Kennzeichnen von Speicherbereichen entweder als ausführbaren Code oder als änderbare Daten, Schutz der Control Flow Integrity).

Ein solcher Ansatz, der auch als "Moving Target Defence" bezeichnet wird, besteht darin, die Angriffsfläche zur Laufzeit anzupassen, sodass Angriffe möglichst ins Leere laufen. Diese Ansätze werden insbesondere um Umfeld von militärisch genutzten Systemen verfolgt.

Die Grundidee von "Moving Target Defence" (MTD) besteht darin, durch Änderungen eines Systems im laufenden Betrieb die Komplexität und den Aufwand für einen Angreifer zu erhöhen und das Zeitfenster für einen Angriff gering zu halten. Die Änderungen können auf unterschiedlichen Ebenen erfolgen (z.B. Ändern von IP-Adressen und Portnummern in einem Netzwerk, Ändern von User-IDs, randomisiertes Speicherlayout).

Bekannten Technologien erschweren zwar das Ausnutzen von vorhandenen Schwachstellen, können dies aber nicht grundsätzlich verhindern. Auch sind bekannte Technologie äußerst aufwendig umzusetzen, da die Randomisierung oft manuell und kundenindividuell erfolgen muss. Außerdem sind die bekannten Technologien dadurch nicht mit einem Secure Boot kompatibel.

Die Aufgabe der Erfindung besteht darin, eine Lösung für eine verbesserte Lösung bereitzustellen, welche das Ausnutzen von Schachstellen in Software erschwert.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zur Erstellung eines zweiten Binärprogrammcodes. Das Verfahren weist die folgenden Schritte auf:
- Laden eines ersten Binärprogrammcodes in eine Binärcode-Randomisierungseinheit,
- Erstellen des zweiten Binärprogrammcodes durch die Binärcode-Randomisierungseinheit,
wobei der zweite Binärprogrammcode Ergebnis einer Diversifikation des ersten Binärprogrammcodes ist,
- Laden des zweiten Binärprogrammcodes in eine erste Einheit, wobei die erste Einheit von einer Computerprozessoreinheit aufgewiesen wird.

Ein Aspekt der Erfindung betrifft eine "Code Diversification", d.h. das Bilden eines randomisierten Binärprogrammcodes. Dies erfolgt insbesondere beim Laden von Binärprogrammcode in die erste Einheit, insbesondere einen (internen) Cache einer Computerprozessoreinheit (Central Processing Unit CPU, System on Chip SoC). Die Binärcode-Randomisierungseinheit verwendet dabei vorzugsweise einen Hardware-basierten Zufallszahlengenerator der Computerprozessoreinheit. Der erste Binärprogrammcode wird vorzugsweise aus einem mit der Computerprozessoreinheit verbundenen flüchtigen Speicherbaustein (Random Access Memory, RAM) oder einem nichtflüchtigen Speicherbaustein (Flash-Memory, Read Only Memory ROM) geladen. Die durch die Binärcode-Randomisierungseinheit diversifizierte zweite Binärprogrammcode wird durch eine Ausführungseinheit (CPU Core) der Computerprozessoreinheit ausgeführt. Die Binärcode-Randomisierungseinheit ist vorzugsweise als Digitalschaltung auf einem Halbleiterbaustein realisiert.

Der Software-Diversifikations-Schutz, insbesondere die Binärcode-Randomisierungseinheit, kann dadurch in einen Prozessor-Baustein, integriert werden. Es kann somit eine Computerprozessoreinheit in Hardware realisiert werden, die implizit einen Schutz vor "Code-Reuse-Angriffen" realisiert. Ein solcher Prozessor kann auch als ein Prozessor mit integriertem "Moving Target Defence"-Schutz beschrieben werden. Durch eine Hardware-basierte Realisierung des Software-Diversifikations-Schutz kann eine hohe Vertrauenswürdigkeit erreicht werden. Insbesondere kann bei jedem Neustart der Computerprozessoreinheit die Randomisierung erneut erfolgen.

Bei der Diversifikation kann beispielsweise ein Maschinenbefehl (Opcode) durch einen äquivalenten Maschinenbefehl ersetzt werden, es kann eine Folge von Maschinenbefehlen durch eine äquivalente Folge von Maschinenbefehlen ersetzt werden, es kann die Reihenfolge von Maschinenbefehlen verändert werden, es können zusätzliche Maschinenbefehle eingefügt werden, es können Sprungbefehle hinzugefügt oder weggelassen werden, es können Registerbelegungen verändert werden.

In einer Weiterbildung der Erfindung erfolgt das Laden des ersten Binärprogrammcodes in die Binärcode-Randomisierungseinheit von einer externen Speichereinheit, insbesondere RAM, Flash, der Computerprozessoreinheit aus, wobei sich die externen Speichereinheit der Computerprozessoreinheit, auch als Prozessor bezeichenbar, zugehörig ist.

Die Diversifikation, auch als Randomisierung bezeichenbar, kann somit beim Laden von einem Prozessor-externen Speicher, insbesondere RAM, Flash, in den Prozessor erfolgen, d.h. beim Laden in einen Cache des Prozessors.

In einer Weiterbildung der Erfindung erfolgt das Laden des ersten Binärprogrammcodes in die Binärcode-Randomisierungseinheit von einer zweiten Einheit aus, wobei die zweite Einheit von der Computerprozessoreinheit aufgewiesen wird.

Die Diversifikation kann somit beim Laden von Programmcode von einem ersten Cache des Prozessors in einen zweiten Cache des Prozessors erfolgen. Insbesondere ist eine Diversifikation beim Laden von einem Level-3-Cache in einen Level-2-Cache, beim Laden von einem Level-2-Cache in einen Level-1-Cache und/oder beim Laden von einem Level-1-Cache in einen einer Pipeline-Stufe einer CPU zugeordneten Cache möglich.

Zusätzlich zur Randomisierung entlang der aufsteigenden Hierarchie, ist eine Randomisierung innerhalb einer Hierarchieebene möglich, insbesondere ein Laden des ersten Binärprogrammcodes aus einem Level-2-Cache in die Binärcode-Randomisierungseinheit, wo der randomisierte zweite Binärprogrammcode erstellt wird und ein anschließendes Laden "zurück" in den Level-2-Cache. Dies entspricht einer Mehrfachrandomisierung, wenn zusätzlich beim Start der CPU auch eine Randomisierung stattgefunden hat.

In einer weiteren Weiterbildung der Erfindung ist die zweite Einheit ausgebildet als:
- Speicherschnittstelle,
- On-Chip-Bus,
- Cache-Speichereinheit,
- Level-3-Cache-Speichereinheit,
- Level-2-Cache-Speichereinheit,
- Level-1-Cache-Speichereinheit und/oder
- interne Cache-Speichereinheit eines Kerns der Computerprozessoreinheit.

In einer weiteren Weiterbildung der Erfindung ist die erste Einheit ausgebildet als:
- Speicherschnittstelle,
- On-Chip-Bus,
- Cache-Speichereinheit,
- Level-3-Cache-Speichereinheit,
- Level-2-Cache-Speichereinheit,
- Level-1-Cache-Speichereinheit und/oder
- interne Cache-Speichereinheit eines Kerns der Computerprozessoreinheit.

Das hat wie zuvor beschrieben den Vorteil, dass die Randomisierung zwischen verschiedenen Einheiten der Computerprozessoreinheit erfolgen kann. Die Diversifikation kann somit insbesondere beim Laden von Programmcode von einem ersten Cache des Prozessors in einen zweiten Cache des Prozessors erfolgen. Insbesondere ist eine Diversifikation beim Laden von einem Level-3-Cache in einen Level-2-Cache, beim Laden von einem Level-2-Cache in einen Level-1-Cache und/oder beim Laden von einem Level-1-Cache in einen einer Pipeline-Stufe einer CPU zugeordneten Cache möglich.

In einer weiteren Weiterbildung der Erfindung wird die Binärcode-Randomisierungseinheit von:
- der Computerprozessoreinheit
- einem System on Chip (SoC)
- einem Application-specific integrated circuit (ASIC) oder
- einem Field-programmable gate array (FPGA)
aufgewiesen.

Dies hat den Vorteil, dass die Binärcode-Randomisierungseinheit als Zusatzkomponente realisiert sein kann, insbesondere auf einem FPGA oder ASIC, der an der Speicherschnittstelle zu einem RAM-Speicher und/oder einem Flash-Speicher angeordnet ist. Dies hat den Vorteil, dass ein Standard-CPU-Baustein um eine Binärcode-Randomisierungseinheit, auch als Code-Randomizer bezeichenbar, erweitert werden kann. Dies hat den Vorteil, dass eine Realisierung auch unabhängig vom Hersteller der CPU erfolgen kann.

In einer weiteren Weiterbildung der Erfindung ist die Binärcode-Randomisierungseinheit mit einem Hardware-Zufallszahlengenerator verbunden.

Die hat den Vorteil, dass die Randomisierung abhängig von einem Zufallsparameter, insbesondere einer Zufallszahl erfolgt, die von einem Zufallszahlengenerator, insbesondere einem True Random Number Generator (TRNG), bereitgestellt wird.

Die Computerprozessoreinheit verfügt somit vorzugsweise über einen integrierten Hardware-Zufallszahlengenerator (True Random Number Generator), von dem abhängig die Diversifikation erfolgt. Zusätzlich kann die Diversifikation abhängig von einer Chip-Identifikationsnummer der Computerprozessoreinheit erfolgen.

In einer weiteren Weiterbildung der Erfindung wird die Computerprozessoreinheit von einem IoT-Gerät und/oder einem Steuergerät und/oder einer Edge-Computing-Einheit, aufgewiesen.

Dies hat den Vorteil, dass das erfindungsgemäße Verfahren in verschiedenen Geräten Anwendung findet und die Sicherheit des IoT-Geräts und/oder des Steuergeräts und/oder der Edge-Computing-Einheit verbessert werden kann.

In einer weiteren Weiterbildung der Erfindung ist die Computerprozessoreinheit:
- als Mikroprozessor,
- als Mikrocontroller,
- als Soft-CPU,
- als Multi-Chip-Modul
- aus einem einzelner Halbleiterbaustein,
   und/oder
- aus separaten Halbleiterbausteinen
ausgebildet.

In einer weiteren Weiterbildung der Erfindung erfolgt die Diversifikation unter Einbeziehung einer Chip-Identifikationsnummer der Computerprozessoreinheit. Dies hat den Vorteil, dass die Randomisierung individuell and angepasst an die Chip-Identifikationsnummer der Computerprozessoreinheit erfolgt.

In einer weiteren Weiterbildung der Erfindung erfolgt die Diversifikation unter Einbeziehung einer eFuse eines One-Time Programmable (OTP) Speichers. Dies hat den Vorteil, dass die Randomisierung individuell and angepasst an die eFuse eines One-Time Programmable (OTP) Speichers erfolgt. Der One-Time Programmable (OTP) Speicher ist dabei vorzugsweise in der Prozessoreinheit integriert.

Somit kann in einer Variante abhängig von einer eFuse (eine übliche Realisierung eines One-Time Programmable OTP-Speichers) eine unterschiedliche Art der Randomisierung erfolgen.

Auch ist es möglich, dass eine Randomisierung oder eine bestimmte Art der Randomisierung nur erfolgt oder nur auf eine gewisse Weise erfolgt, wenn Secure Boot aktiviert ist oder wenn eine Debug-Schnittstelle (JTAG-Port) gesperrt ist.

In einer weiteren Weiterbildung der Erfindung weist das Verfahren den zusätzlichen Verfahrensschritt auf:
- Diversifikation einer kompilierten Form eines Programmcodes, insbesondere auf Binärcode-Ebene oder auf Zwischencode-Ebene, oder auf Source-Code-Ebene, zum Bilden des ersten Binärprogrammcodes.

Dies hat den Vorteil, dass der erfindungsgemäße Schutz zusätzlich zu im Stand der Technik bekannter Software-basierter Code-Diversifikation erfolgen kann. Der zweite Binärprogrammcode ist also bereits diversifiziert, er wird jedoch erfindungsgemäß ein weiteres Mal durch die Binärcode-Randomisierungseinheit der Prozessoreinheit diversifiziert, bevor er durch die Ausführungseinheit der Prozessoreinheit ausgeführt wird. Die Zwischencode-Ebene kann ein Code für eine virtuelle Maschine, z.B. LLVM, sein.

Die Diversifikation, insbesondere Code-Randomisierung, kann somit zusätzlich auch auf Software-Ebene, durch einen Compiler oder durch ein Betriebssystem, erfolgen. Die erfindungsgemäße Umsetzung in Hardware durch eine CPU hat den Vorteil, dass die Randomisierung einfach für vorhandenen Binärcode umgesetzt werden kann. Die zusätzliche Diversifikation einer kompilierten Form, insbesondere auf Software-Code-Ebene, des zweiten Binärprogrammcodes hat den Vorteil eines zusätzlichen Schutzes.

In einer weiteren Weiterbildung der Erfindung wird die Diversifikation auf den gesamten ersten Binärprogrammcode oder nur auf Teile des ersten Binärprogrammcodes angewandt.

Das bedeutet, dass die Diversifikation grundsätzlich erfolgen kann, d.h. für den gesamten Code. Es ist jedoch auch möglich zu konfigurieren, dass die Diversifikation nur für bestimmte Speicherbereiche erfolgt. Insbesondere kann ein ausführbarer Speicherbereich mit Programmcode randomisiert werden und ein Speicherbereich mit Nutzerdaten nicht randomisiert werden. Die Auswahl über die zu randomisierenden Teile des Binärcodes kann von der CPU getroffen werden. Das Konfigurieren kann durch das Brennen von eFuses eines OTP-Memories der Prozessoreinheit oder durch das Setzen von Konfigurationsregistern einer Speicherverwaltungseinheit (Memory Management Unit, MMU) der Prozessoreinheit erfolgen.

In einer weiteren Weiterbildung der Erfindung weist das Verfahren den zusätzlichen Verfahrensschritt auf:
- Prüfen einer Zulässigkeit des ersten Binärprogrammcodes. Dies ist auch als Secure-Boot bezeichenbar.

In einer weiteren Weiterbildung der Erfindung erfolgt das Prüfen einer Zulässigkeit des ersten Binärprogrammcodes durch:
- Prüfen einer digitalen Signatur,
- Prüfen eines Nachrichten-Authentisierungscodes und/oder
- Prüfen eines kryptographischen Hash-Werts.

Dies bedeutet, vorzugsweise realisiert die CPU ein Secure Boot, bei der von der CPU geladener Binärprogrammcode auf Zulässigkeit geprüft wird. Die Code-Randomisierung erfolgt dabei, nachdem die kryptographische Prüfsumme des Secure Boots erfolgreich überprüft wurde. Randomisierungsverfahren nach dem Stand der Technik haben den Nachteil, dass sie ein Secure-Boot ausschließen.

In einer weiteren Weiterbildung der Erfindung werden die Schritte des Verfahrens zu periodischen und/oder manuell auswählbaren oder konfigurierbaren Zeitpunkten wiederholt.

Insbesondere haben Level-1-Caches (L1-Caches) weniger Speicherplatz als Level-2-Caches (L2-Caches) und deshalb nur einen kleineren Teil des Programmcodes verfügbar oder den Programmcode nicht dauerhaft verfügbar. Bei erneutem Laden erfolgt somit automatische eine erneute Randomisierung. Alternativ kann die Randomisierung auch periodisch/zu festgelegten Zeitpunkten forciert werden.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird. Das Computerprogrammprodukt kann in einer Ausprägung ein Bitstream für eine konfigurierbare Hardwareschaltung, insbesondere ein Field Programmable Gate Array FPGA, sein.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Im Folgenden sind weitere allgemeine Vorteile der Erfindung erläutert.

Durch die Realisierung der Binärcode-Randomisierungseinheit auf einer Computerprozessoreinheit geschieht die Diversifikation auf Hardwareebene und es kann Schutz mit hoher Performance und Vertrauenswürdigkeit realisiert werden.

Außerdem ergibt sich der Vorteil, dass die Randomisierung/Diversifizierung bei langlaufenden Prozessen wiederholt erfolgen kann. Dies ist bei Systemen, die nur selten neu gestartet werden, vorteilhaft, insbesondere bei Servern, Edge-Computing-Systemen, bei IoT-Geräten und bei eingebetteten Systemen.

Die erfindungsgemäße Code-Diversifikation ist außerdem kompatibel mit einem "Secure Boot", bei dem die Integrität eines geladenen Programmcodes vor dessen Ausführung durch den Prozessor geprüft wird.

Eine Code-Randomisierung kann zusätzlich oder alternativ zur vorgestellten Variante auch auf Source-Code-Ebene, durch einen Compiler oder durch ein Betriebssystem erfolgen. Die vorgestellte erfindungsgemäße Umsetzung in Hardware durch eine CPU hat hingegen den Vorteil, dass die Randomisierung einfach für vorhandenen Code umgesetzt werden kann.

Außerdem wird ein hohes Maß an Zufälligkeit erreicht, da automatisch eine unterschiedliche Randomisierung auf unterschiedlichen Plattformen, insbesondere CPU-Exemplaren und zu unterschiedlichen Zeitpunkten erfolgen kann.

Weiterhin wird durch die erfindungsgemäße Realisierung ermöglicht, dass eine Code-Randomisierung für Binärcode erfolgt, der durch eine digitale Signatur geschützt ist, die von der CPU im Rahmen eines Secure Boots überprüft wird.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens,
- Fig. 2: eine Computerprozessoreinheit nach dem Stand der Technik,
- Fig. 3: eine Computerprozessoreinheit mit einer internen Binärcode-Randomisierungseinheit und
- Fig. 4: eine Computerprozessoreinheit mit einer externen Binärcode-Randomisierungseinheit.

### DETAILLIERTE BESCHREIBUNG DER ERFINDUNG

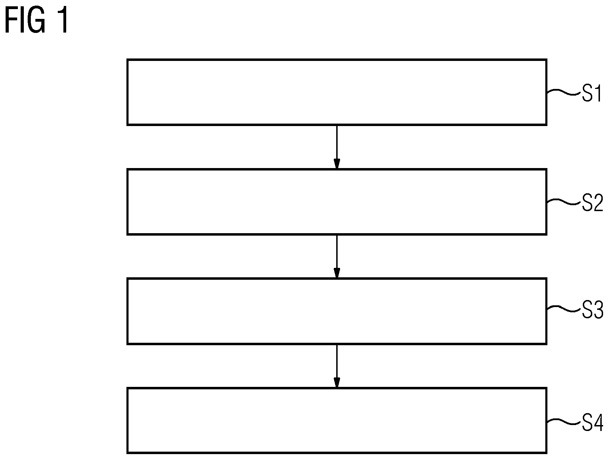

Fig. 1 zeigt ein Ablaufdiagramm des erfindungsgemäßen Verfahrens zur Erstellung eines zweiten Binärprogrammcodes. Das Verfahren weist die folgenden Schritte auf:
- Schritt S1: Laden eines ersten Binärprogrammcodes in eine Binärcode-Randomisierungseinheit 3,
- Schritt S2: Erstellen des zweiten Binärprogrammcodes durch die Binärcode-Randomisierungseinheit 3,
   wobei der zweite Binärprogrammcode Ergebnis einer Diversifikation des ersten Binärprogrammcodes ist,
- Schritt S3: Laden des zweiten Binärprogrammcodes in eine erste Einheit, wobei die erste Einheit von einer Computerprozessoreinheit 2 aufgewiesen wird und
- optionalen Schritt S4: Prüfen einer Zulässigkeit des ersten Binärprogrammcodes, wobei das Prüfen einer Zulässigkeit des ersten Binärprogrammcodes durch:
   - Prüfen einer digitalen Signatur,
   - Prüfen eines Nachrichten-Authentisierungscodes und/oder
   - Prüfen eines kryptographischen Hash-Werts
   erfolgt.

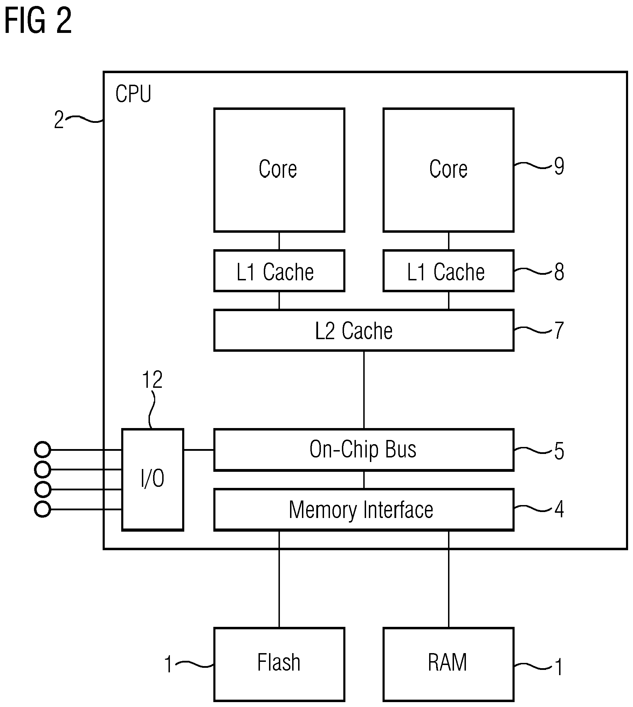

Fig. 2 zeigt eine Computerprozessoreinheit 2 nach dem Stand der Technik. Fig. 2 zeigt beispielhaft eine CPU 2, insbesondere einen Mikroprozessor oder Mikrocontroller; kann aber auch als Soft CPU 2 auf einem FPGA, ASIC oder System on Chip realisiert sein; die CPU 2 ist üblicherweise in einem einzelnen Halbleiterbaustein realisiert, sie kann jedoch auch als Multi-Chip-Modul oder aus separaten Halbleiterbausteinen realisiert sein. Die Computerprozessoreinheit 2 nach dem Stand der Technik weist zwei CPU-Cores 2, mehreren Caches (L1-Cache 8ist einem Core zugeordnet, L2-Cache 7 wird von beiden Cores 9 verwendet), einem On-Chip-Bus 5, Speicherschnittstelle 4 und einer Ein-/Ausgabeschnittstelle 12. Außerdem sind externe Speicher 1, insbesondere Flash 1 und RAM 1 dargestellt.

Eine solche CPU 2 kann insbesondere in einem IoT-Gerät oder in einem Steuergerät verwendet werden. Der Programmcode wird von dem externen Speicher 1, insbesondere Flash 1 und RAM 1 in einen Cache 7, 8 der CPU 2 geladen, bevor er tatsächlich durch einen Core 9 der CPU 2 ausgeführt wird. Es können separate Cache 7, 8 für Code und für Daten vorgesehen sein (nicht dargestellt). Auch ein Core 9 kann einen internen Cache (nicht dargestellt) aufweisen, insbesondere einen Microcode-Cache.

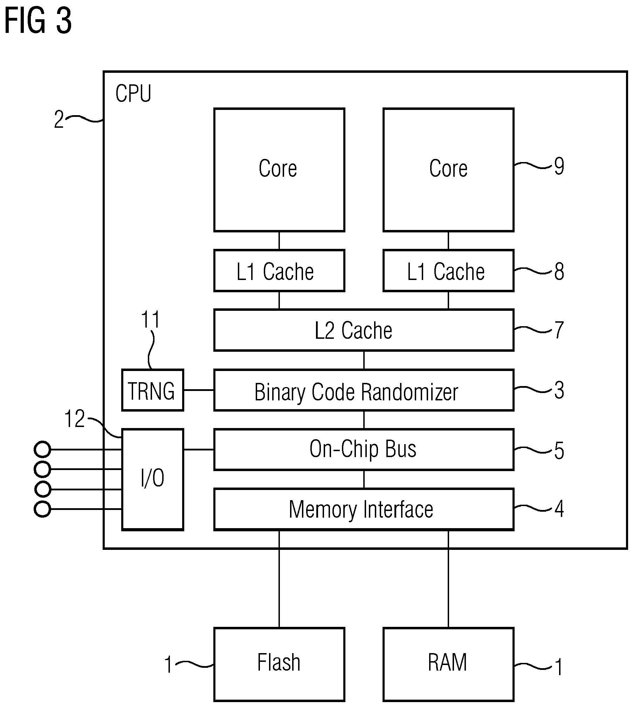

Fig. 3 zeigt eine Computerprozessoreinheit mit einer internen Binärcode-Randomisierungseinheit 3. Fig. 3 zeigt nun eine erfindungsgemäße Realisierung, bei der eine Randomisierung des in den L2-Cache 7 geladenen Programmcodes erfolgt. Dazu wird der von einem externen Speicher 1, insbesondere Flash 1 und RAM 1 geladene Programmcode auf der CPU 2 randomisiert, bevor er in einen Cache 7, 8 geschrieben wird. Die Randomisierung erfolgt abhängig von einem Zufallsparameter, insbesondere Zufallszahl, die von einem Zufallszahlengenerator 11, insbesondere TRNG, True Random Number Generator 11, bereitgestellt wird.

Alternativ oder zusätzlich (nicht dargestellt) kann eine Code-Randomisierung auch beim Laden von Programmcode von dem L2-Cache 7 in einen L1-Cache 8, beim Laden von Programmcode vom L1-Cache 8 in einen internen Cache des Core 9 erfolgen. Der Code-Randomizer 3 kann auch zwischen SpeicherSchnittstelle 4 und einem On-Chip-Bus 5 angeordnet sein.

Das hat den Vorteil, dass die Randomisierung zwischen verschiedenen Einheiten der Computerprozessoreinheit erfolgen kann. Die Diversifikation kann somit insbesondere beim Laden von Programmcode von einem ersten Cache des Prozessors in einen zweiten Cache des Prozessors erfolgen. Insbesondere ist eine Diversifikation beim Laden von einem Level-3-Cache in einen Level-2-Cache, beim Laden von einem Level-2-Cache in einen Level-1-Cache und/oder beim Laden von einem Level-1-Cache in einen einer Pipeline-Stufe einer CPU zugeordneten Cache möglich.

Vorzugsweise realisiert die CPU 2 ein Secure Boot (nicht dargestellt), bei der von der CPU 2 geladener Programmcode auf Zulässigkeit geprüft wird (durch Prüfen einer digitalen Signatur, eines Nachrichten-Authentisierungscodes oder eines kryptographischen Hash-Werts). Die Code-Randomisierung erfolgt dabei, nachdem die kryptographische Prüfsumme des Secure Boots erfolgreich überprüft wurde.

Weiterhin kann in einer Variante abhängig von einer eFuse (eine übliche Realisierung eines One-Time Programmable OTP-Speichers) eine unterschiedliche Art der Randomisierung erfolgen. Auch ist es möglich, dass eine Randomisierung oder eine bestimmte Art der Randomisierung nur erfolgt, wenn Secure Boot aktiviert ist oder wenn eine Debug-Schnittstelle (JTAG-Port) gesperrt ist.

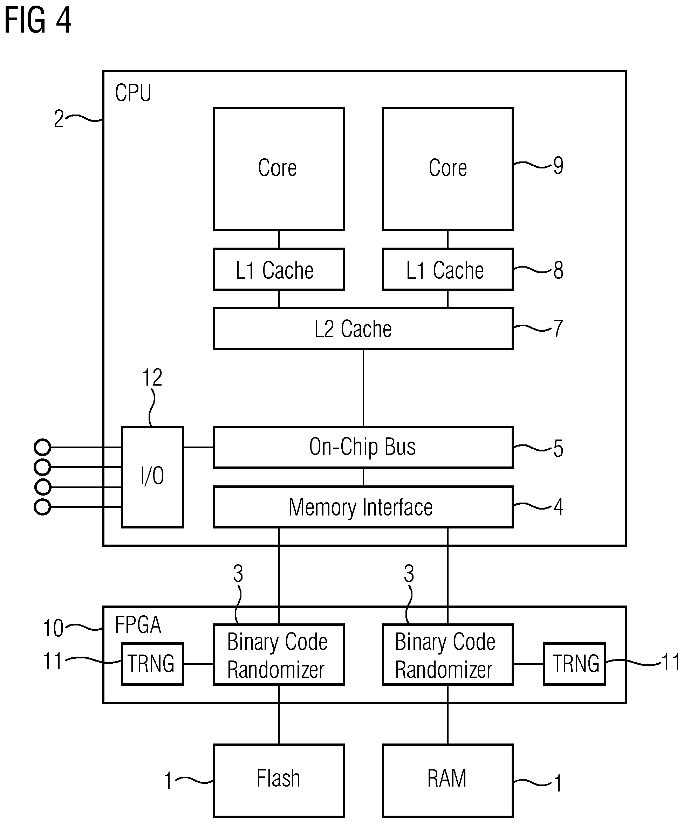

Fig. 4 zeigt eine Computerprozessoreinheit mit einer externen Binärcode-Randomisierungseinheit 3. Fig. 4 zeigt eine Variante, bei der der erfindungsgemäße Code-Randomizer 3 als Zusatzkomponente realisiert ist, z.B. auf einem FPGA 10 oder ASIC, der an der Speicherschnittstelle zu einem RAM-Speicher 1 und/oder einem Flash-Speicher 1 angeordnet ist. Dies hat den Vorteil, dass ein Standard-CPU-Baustein 2 um einen Code-Randomizer 3 erweitert werden kann. Dies kann auch unabhängig vom Hersteller der CPU 2 erfolgen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zur Erstellung eines zweiten Binärprogrammcodes, mit den Schritten:
- Laden (S1) eines ersten Binärprogrammcodes in eine Binärcode-Randomisierungseinheit (3),
- Erstellen (S2) des zweiten Binärprogrammcodes durch die Binärcode-Randomisierungseinheit (3),
wobei der zweite Binärprogrammcode Ergebnis einer Diversifikation des ersten Binärprogrammcodes ist,
- Laden (S3) des zweiten Binärprogrammcodes in eine erste Einheit, wobei die erste Einheit von einer Computerprozessoreinheit (2) aufgewiesen wird.

2. Verfahren nach Anspruch 1,
wobei das Laden (S1) des ersten Binärprogrammcodes in die Binärcode-Randomisierungseinheit:
- von einer externen Speichereinheit (1) der Computerprozessoreinheit aus erfolgt, wobei sich die externen Speichereinheit (1) der Computerprozessoreinheit (2) zugehörig ist
oder
- von einer zweiten Einheit aus erfolgt, wobei die zweite Einheit von der Computerprozessoreinheit (2) aufgewiesen wird.

3. Verfahren nach Anspruch 2,
wobei die erste Einheit und/oder die zweite Einheit ausgebildet ist als:
- Speicherschnittstelle (4),
- On-Chip-Bus (5),
- Cache-Speichereinheit (6),
- Level-3-Cache-Speichereinheit,
- Level-2-Cache-Speichereinheit (7),
- Level-1-Cache-Speichereinheit (8) oder
- interne Cache-Speichereinheit (9) eines Kerns der Computerprozessoreinheit (2).

4. Verfahren nach einem der vorhergehenden Ansprüche,
wobei die Binärcode-Randomisierungseinheit (3) von:
- der Computerprozessoreinheit (2)
- einem System on Chip (SoC)
- einem Application-specific integrated circuit (ASIC) oder
- einem Field-programmable gate array (FPGA) (10)
aufgewiesen wird.

5. Verfahren nach einem der vorhergehenden Ansprüche,
wobei die Binärcode-Randomisierungseinheit (3) mit einem Hardware-Zufallszahlengenerator (11) verbunden ist.

6. Verfahren nach einem der vorhergehenden Ansprüche,
wobei die Computerprozessoreinheit (2) von:
- einem IoT-Gerät und/oder
- einem Steuergerät und/oder
- einer Edge-Computing-Einheit,
aufgewiesen wird.

7. Verfahren nach einem der vorhergehenden Ansprüche,
wobei die Computerprozessoreinheit (2):
- als Mikroprozessor,
- als Mikrocontroller,
- als Soft-CPU,
- als Multi-Chip-Modul
- aus einem einzelner Halbleiterbaustein,
und/oder
- aus separaten Halbleiterbausteinen
ausgebildet ist.

8. Verfahren nach einem der vorhergehenden Ansprüche,
wobei die Diversifikation unter Einbeziehung:
- einer Chip-Identifikationsnummer der Computerprozessoreinheit (2) oder
- einer eFuse eines One-Time Programmable (OTP) Speichers erfolgt.

9. Verfahren nach einem der vorhergehenden Ansprüche,
mit dem zusätzlichem Verfahrensschritt:
- Diversifikation einer kompilierten Form des zweiten Binärprogrammcodes.

10. Verfahren nach einem der vorhergehenden Ansprüche,
wobei die Diversifikation auf:
- den gesamten ersten Binärprogrammcode oder
- Teile des ersten Binärprogrammcodes
angewandt wird.

11. Verfahren nach einem der vorhergehenden Ansprüche,
mit dem zusätzlichem Verfahrensschritt:
- Prüfen (S4) einer Zulässigkeit des ersten Binärprogrammcodes, wobei das Prüfen einer Zulässigkeit des ersten Binärprogrammcodes durch:
- Prüfen einer digitalen Signatur,
- Prüfen eines Nachrichten-Authentisierungscodes und/oder
- Prüfen eines kryptographischen Hash-Werts erfolgt.

12. Verfahren nach einem der vorhergehenden Ansprüche,
wobei die Schritte des Verfahrens zu:
- periodischen und/oder
- manuell auswählbaren
Zeitpunkten wiederholt werden.

13. Verfahren nach einem der vorhergehenden Ansprüche,
mit dem zusätzlichen Verfahrensschritt:
- Diversifikation einer kompilierten Form eines Programmcodes, insbesondere auf Binärcode-Ebene oder auf Zwischencode-Ebene, oder auf Source-Code-Ebene, zum Bilden des ersten Binärprogrammcodes.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.
